# EUROPÄISCHE PATENTSCHRIFT

(11) **EP 2 307 197 B1**
(45) Veröffentlichungstag und Bekanntmachung des Hinweises auf die Patenterteilung: **03.01.2018**
(21) Anmeldenummer: 09776986.3
(22) Anmeldetag: 06.07.2009
(51) Int. Cl.: B32B 27/12, B60R 21/00, B62D 29/04

(54) **FAHRZEUG-BAUTEIL AUS KUNSTSTOFF**
AUTOMOBILE COMPONENT MADE OF PLASTIC
PIÈCE EN MATIÈRE PLASTIQUE POUR VÉHICULE

(30) Priorität: 18.07.2008 DE 102008033923
(43) Veröffentlichungstag der Anmeldung: 13.04.2011
(73) Patentinhaber: Webasto SE, 82131 Stockdorf (DE); Covestro Deutschland AG, 51373 Leverkusen (DE)
(72) Erfinder: LEGLER, Dirk, 86947 Weil (DE); WOKÖCK, Jan, 83043 Bad Aibling (DE); WAGNER, Adam, 82110 Germering (DE); PETER, Thomas, 85247 Arnbach (DE); KÖLBL, Michael, 82061 Neuried (DE); STEMMER, Thomas, 81371 München (DE); HEUSER, Petra, 81245 München (DE); MIES, Detlef, 50189 Elsdorf (DE); LIEBIG, Hans-Jürgen, 51375 Leverkusen (DE)
(74) Vertreter: Fischer & Konnerth
(86) Internationale Anmeldenummer: PCT/EP2009/004881
(87) Internationale Veröffentlichungsnummer: WO 2010/006718

(56) Entgegenhaltungen:
- DE-A1- 1 943 008
- DE-A1- 2 755 970
- DE-A1- 10 041 640
- DE-A1- 10 244 287
- DE-A1- 19 717 271

## Beschreibung

Die Erfindung betrifft ein Fahrzeug-Außenhautbauteil aus Kunststoff gemäß dem Oberbegriff des Patentanspruchs 1.

Außenliegende Bauteile von Fahrzeugen werden bislang überwiegend aus Metall (Stahlblech oder Aluminium) hergestellt. Diese Materialien verformen sich bei einem Unfall fließend. In neuerer Zeit werden mehr und mehr außenliegende Bauteile von Fahrzeugen auch aus Kunststoffen hergestellt. Diese bestehen überwiegend aus Polyurethan (PU), das bei einem Aufprall bricht und mit seinen scharfen Bruchkanten eine erhöhte Verletzungsgefahr für die Unfallbeteiligten darstellt. Zur Abhilfe wurden beispielsweise bereits Kotflügel des VW Touareg mit nachträglich auf die Innenseite aufgebrachten Splitterschutz-Folien versehen. Aus der DE 100 41 640 A1 und der DE 27 55 970 A1 sind Innenverkleidungsteile für Fahrzeuge mit einer Splitterschutzeinlage bekannt.

Aus der gattungsgemäßen DE 102 44 287 A1 ist ein Verbundbauteil für ein Fahrzeug bekannt, das aus einer Außenhaut aus einer Folie und einer tragenden Verstärkungsschicht, die aus einer Wabenstruktur und jeweils einer diese zur beiden Seiten bedeckenden, mit Glasfasern armierten Polyurethan-Schicht aufgebaut ist. Auch beim Brechen eines derartigen Verbundbauteils entstehen scharfe Bruchkanten mit einer erhöhten Verletzungsgefahr.

Aus der DE 197 17 271 A1 ist ein Außenhaut-Formteil für eine Fahrzeugkarosserie bekannt geworden, das aus einem zum Sprödbruch neigenden Basiswerkstoff hergestellt ist und eine Deckschicht oder Zwischenlage aufweist, durch die gegenüber unfallbedingt absplitternden Formteilfragmenten des Basiswerkstoffs eine Haft- und/oder Auffangwirkung erzielbar ist.

Der Erfindung liegt die Aufgabe zugrunde, ein Fahrzeug-Außenhautbauteil aus Kunststoff zu schaffen, bei dem auch bei einem Bruch keine scharfen Kanten entstehen.

Diese Aufgabe wird erfindungsgemäß durch ein Fahrzeug-Außenhautbauteil mit den Merkmalen des Patentanspruchs 1 gelöst. Vorteilhafte Ausgestaltungen der Erfindung sind in den Unteransprüchen angegeben.

Die Erfindung sieht im Kern vor, dass eine Splitterschutzschicht als Splitterschutz-Gewebe aus einem elastischen Material ausgebildet und diese in wenigstens eine tragende Schicht, bevorzugt in deren Randbereich, oder zwischen zwei benachbarten tragenden Schichten eingebettet ist. Durch die Ausbildung als Splitterschutz-Gewebe weist dieses zwischen den einzelnen Gewebe-Maschen Zwischenräume auf, durch die das Kunststoffmaterial der benachbarten tragenden Schichten hindurch dringt. Das Splitterschutz-Gewebe aus elastischem Material bindet dadurch die spröderen tragenden Schichten an sich und verhindert die Bildung von scharfen Bruchkanten. Ein Fahrzeug-Außenhautbauteil, das gemäß der Erfindung aufgebaut ist, wird somit bei einem Unfall nur ungefährliche Risse jedoch keine scharfkantigen Bruchstellen aufweisen.

Gemäß einer vorteilhaften Ausgestaltung der Erfindung besteht die wenigstens eine tragende Schicht aus Polyurethan (PU) und/oder aus einer Wabenschicht und/oder aus einer Glasfasermatte und/oder aus einer Entkopplungsschicht. Alternativ dazu kann die tragende Schicht auch aus einem Kunststoff- oder Metallschaum oder aus einem kompakten, leichten und stabilen Kernmaterial bestehen.

Gemäß einer besonders bevorzugten Ausführungsform ist die wenigstens eine tragende Schicht oder wenigstens eine von mehreren tragenden Schichten im Composite Spray Moulding-Verfahren (CSM-Verfahren) und/oder im Long Fibre Injection-Verfahren (LFI-Verfahren) und/oder im Glasfaser-Matten-Polyurethan-Verfahren (GM-PU-Verfahren) und/oder im Resin Transfer Moulding-Verfahren (RTM-Verfahren) und/oder im Sheet Moulding Compound- Verfahren (SMC-Verfahren) und/oder im Reaction Injection Moulding-Verfahren (RIM-Verfahren) und/oder im Reinforced Reaction Injection Moulding-Verfahren (RRIM-Verfahren) und/oder im Spritzguss-Verfahren hergestellt.

Das wenigstens eine Splitterschutz-Gewebe besteht bevorzugt aus Polyethylen (PE) und/oder aus Polyethylenterephthalat (PET) und/oder aus Polyamid (PA) und/oder aus Polypropylen (PP) und/oder aus Aramid und/oder aus elastischem Polyurethan (PU) und/oder aus natürlichem oder synthetischem Kautschuk und/oder aus einem Stahlgewebe.

Bei einer bevorzugten Ausführungsform bestehen die tragenden Schichten des Fahrzeug-Außenhautbauteils von innen nach außen nacheinander aus einer ersten Schicht aus Polyurethan (PU) oder aus einem anderen Duromer, aus einer Kernschicht in Wabentechnologie, aus einer zweiten Schicht aus Polyurethan (PU) oder aus einem anderen Duromer, aus einer Entkopplungsschicht und aus einer Außenhaut, wobei wenigstens ein Splitterschutz-Gewebe zwischen der ersten Schicht aus Polyurethan (PU) oder aus einem anderen Duromer und der Kernschicht und/oder zwischen der zweiten Schicht aus Polyurethan (PU) oder aus einem anderen Duromer und der Kernschicht und/oder zwischen der zweiten Schicht aus Polyurethan (PU) und der Entkopplungsschicht angeordnet ist.

Bei allen Ausführungsformen ist es vorteilhaft, wenn in wenigstens eine der tragenden Schichten aus Polyurethan eine Glasfasermatte als Armierung eingebettet ist. Hierdurch wird die Festigkeit der Gesamtstruktur deutlich erhöht.

Ebenso vorteilhaft ist es bei allen Ausführungsformen, wenn die den Abschluss des Fahrzeug-Außenhautbauteils nach außen bildende Außenhaut aus einer Kunststoffschicht besteht, die bereits beim Zulieferer in der gewünschten Fahrzeugfarbe eingefärbt wird. Dadurch können nachträgliche Lackierarbeiten beim Fahrzeughersteller völlig entfallen.

Die Erfindung eignet sich für alle Fahrzeug-Außenhautbauteile aus Kunststoff, insbesondere jedoch für Fahrzeug-Außenhautbauteile wie Fahrzeug-Dachmodule, Dachholme, A-, B- , C- oder D-Säulen von Fahrzeugen, Fahrzeugtüren, Kotflügel, Motorraumklappen, Kofferraumklappen, Heckmodule, Dachschalen von Cabriolet-Verdecken, Front- oder Heckspoiler.

Nachfolgend wird ein erfindungsgemäßes Fahrzeug-Außenhautbauteil anhand mehrerer Ausführungsbeispiele unter Bezugnahme auf die Zeichnung näher erläutert. Es zeigt:
- Fig. 1: eine perspektivische Ansicht eines oberen Teils eines Fahrzeugs mit einem Fahrzeugdachmodul;
- Fig. 2: einen Längsschnitt in Höhe der Mittellängsebene des Fahrzeugs im Bereich der Vorderkante des Dachmoduls;
- Fig. 3: einen Querschnitt durch den Rand des Dachmoduls im Bereich eines Seitenholms;
- Fig. 4: einen Längsschnitt in Höhe der Mittellängsebene des Fahrzeugs im Bereich der Hinterkante des Dachmoduls,
- Fig. 5: einen Längsschnitt durch ein Fahrzeug-Außenhautbauteil mit einem mehrschichtigen Aufbau der Tragschichten; und
- Fig. 6: eine Draufsicht auf ein Splitterschutz-Gewebe gemäß der Schnittlinie VI in Figur 5.

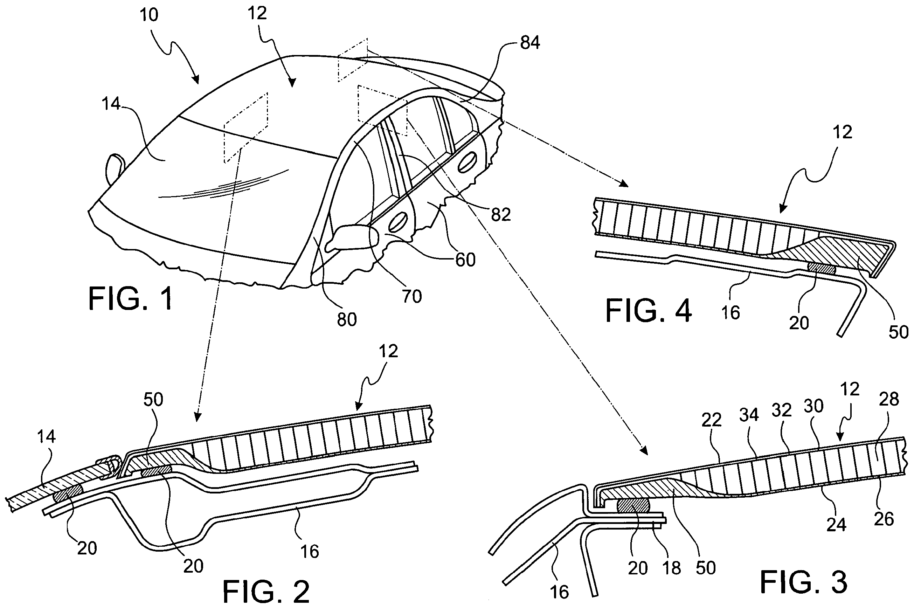

Das in Fig. 1 gezeigte Fahrzeug 10 weist anschließend an die Frontscheibe 14 ein Dachmodul 12 auf. Dieses Dachmodul 12 sowie die ebenfalls in Figur 1 angedeuteten Fahrzeugtüren 60, Dachholme 70, A-Säulen 80, B-Säulen 82 und C-Säulen 84 bilden exemplarisch Fahrzeug-Bauteile 40, deren Außenhaut die Außenfläche des Fahrzeugs bildet. Die Erfindung ist jedoch auch an anderen Fahrzeug-Bauteilen 40, wie beispielsweise Kotflügeln, Motorraumklappen, Kofferraumklappen, Heckmodulen, Dachschalen von Cabriolet-Verdecken, Front- oder Heckspoiler, vorteilhaft anwendbar.

In den Schnitten gemäß den Figuren 2 bis 4 ist anhand des Dachmoduls 12 ein erstes Ausführungsbeispiel für ein erfindungsgemäßes Fahrzeug-Bauteil 40 dargestellt. Das Dachmodul 12 ist mittels einer Kleberaupe 20 an einem Dachrahmen 16 befestigt. Der Dachrahmen 16 weist dazu entsprechende Flanschbereiche 18 auf.

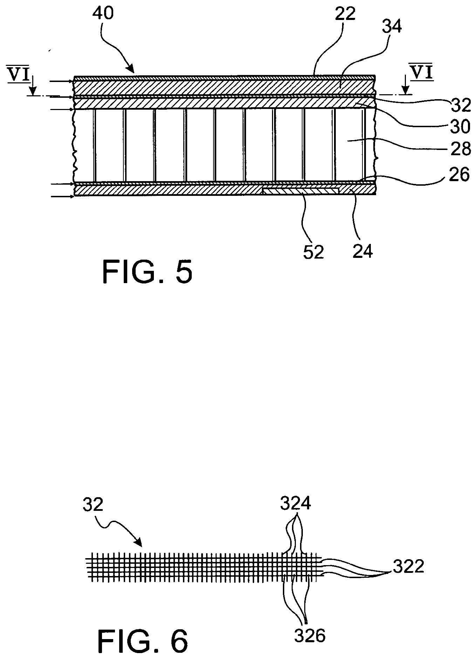

Wie am besten aus Figur 5 zu erkennen ist, ist der Schichtaufbau des Dachmoduls 12 von innen nach außen gebildet von einer ersten tragenden Schicht 24, einem Splitterschutz-Gewebe 26, einer als Wabenstruktur gebildeten Kernschicht 28, einer zweiten tragenden Schicht 30, einem Splitterschutz-Gewebe 32, einer Entkopplungsschicht 34 und einer Außenhaut 22.

Die tragenden Schichten 24 und 30 bestehen bevorzugt aus Polyurethan (PU) mit einem Flächengewicht von etwa 300 g bis 500 g pro Quadratmeter, das optional und bevorzugt jeweils mittels einer Glasfasermatte mit einem Flächengewicht von etwa 200 g bis 500 g pro Quadratmeter armiert ist. Die Dicke der tragenden Schichten 24 und 30 beträgt bevorzugt etwa 0,2 mm bis 1,5 mm.

Die Kernschicht 28 besteht bevorzugt aus einer Papierwabe, mit einer Dicke (Höhe) von etwa 5 mm bis zu etwa 55 mm. Alternativ dazu kann die Kernschicht auch aus einem Kunststoffschaum, einem Metallschaum (z.B. Aluminiumschaum) oder einem kompakten, leichten und stabilen Kernmaterial bestehen.

Die Entkopplungsschicht 34 weist bevorzugt eine Stärke von etwa 0,5 mm bis 4 mm, besonders bevorzugt von etwa 2 mm bis etwa 2,5 mm auf. Sie dient dazu, eine auf der Außenhaut 22 sichtbare Durchdrückung der Wabenstruktur, wie sie beim Zusammenpressen in einer Form beim Fehlen der Entkopplungsschicht 34 sonst auftreten könnte, wirkungsvoll zu verhindern.

Der bis hierher beschriebene Schichtenaufbau aus Kernschicht 28 und den beiden benachbarten tragenden Schichten 24 und 30 wird bevorzugt mittels des Composite Spray Moulding-Verfahrens (CSM-Verfahren; bekannt durch die Firma Hennecke GmbH, D-53754 Sankt Augustin) in einer Form (CSM-Werkzeug) hergestellt. Er ist in ähnlicher Form bereits in der auf dieselbe Anmelderin zurückgehenden DE 100 33 232 C2 dargestellt. Die Festigkeit wird dabei bei sehr geringem Gewicht vor allem durch den in den Bereich der vertikalen Stege der Waben eindringenden und sich mit diesen verbindenden Kunststoff (PU) erzielt.

Die Außenhaut 22 wird bevorzugt durch Sprühen einer Lackschicht oder einer Primer- und Lackschicht in einer Schichtdicke von 0,03 bis 0,06 mm oder aus einem duromerischen Kunststoff, wie beispielsweise ungesättigtem Polyester (UP), in einer Schichtdicke von 0,3 bis 0,6 mm im Inmouldcoating-Verfahren (IMC-Verfahren) unmittelbar im CSM-Werkzeug erzeugt.

In den Randbereichen wird das Dachmodul 12 in der Form stärker gepresst. Hier wird auch die Kernschicht 28 weggelassen und der entstehende Freiraum von unten mit einer tragenden, die Stabilität des Fahrzeug-Dachmoduls 12 erhöhenden Schicht 50 versehen, die bevorzugt durch Spritzen im Long Fibre Injection Moulding-Verfahren (LFI-PUR-Verfahren) aus Polyurethan mit eingedüstem Fasermaterial hergestellt wird. Diese Randbereiche erhöhter Festigkeit befinden sich nach der Montage des Fahrzeug-Dachmoduls 12 in den Flanschbereichen des Dachrahmens 16 in Höhe der Kleberaupen 20.

In den Schichtaufbau der tragenden Schichten 24, 30 sind erfindungsgemäß zwei Splitterschutz-Gewebe eingebettet. Im Ausführungsbeispiel gemäß Figur 5 sind zwei Splitterschutz-Gewebe 26 bzw. 32 vorgesehen, von denen sich das Splitterschutz-Gewebe 26 zwischen der ersten tragenden Schicht 24 und der Kernschicht 28 näher der Innenseite des Fahrzeug-Dachmoduls 12 und das zweite Splitterschutz-Gewebe 32 zwischen der zweiten tragenden Schicht 30 und der Entkopplungsschicht 34 näher der Außenhaut 22 des Fahrzeug-Dachmodul 12 befindet. Bei einem unfallbedingten Bruch des Fahrzeug-Dachmoduls 12 verhindern beide Splitterschutz-Gewebe 26 bzw. 32 ein scharfkantiges Brechen der benachbarten tragenden Schichten sowohl an der Innenseite als auch an der Außenseite, so dass sowohl die Fahrzeuginsassen als auch Unfallbeteiligte außerhalb des Fahrzeugs vor Verletzungen geschützt sind, die durch scharfe Bruchkanten verursacht würden.

Für die Splitterschutz-Gewebe 26 bzw. 32, deren Ausbildung in Fig. 6 anhand des Splitterschutz-Gewebes 32 dargestellt ist, kommen prinzipiell auch andere Einbaupositionen in Frage, die in Fig. 5 durch kleine Pfeile am linken Rand des Fahrzeug-Bauteils 40 angedeutet sind. Dabei können Splitterschutz-Gewebe angeordnet sein: zwischen der Außenhaut 22 und der Entkopplungsschicht 34, eingebettet in die Entkopplungsschicht 34, zwischen der Entkopplungsschicht 34 und der zweiten tragenden Schicht 30 (wie in Fig. 5 mit 32 bereits angedeutet), zwischen der zweiten tragenden Schicht 30 und der Kernschicht 28, zwischen der Kernschicht 28 und der ersten tragenden Schicht 24 (wie in Fig. 5 mit 26 bereits angedeutet) oder unter der ersten tragenden Schicht 24. Sinnvoll ist es in jedem Falle, die Splitterschutz-Gewebe 26 bzw. 32 möglichst weit außen (für den Schutz äußerer Unfallteilnehmer) und/oder möglichst weit innen (für den Schutz der Fahrzeuginsassen) anzuordnen.

Das in Figur 6 exemplarisch gezeigte Splitterschutz-Gewebe 32 besteht aus Längsfäden 322 und Querfäden 324. Zwischen den einzelnen Maschen 326 verbleiben Zwischenräume, durch welche das Kunststoffmaterial der benachbarten tragenden Schichten (in Figur 5 der Schichten 24 bzw. 30) hindurch dringt und somit eine innige Verbindung mit dem elastischeren Splitterschutz-Gewebe 32 eingeht.

Die Gesamtdicke des Fahrzeug-Bauteils 40 beträgt zwischen etwa 2 mm und etwa 60 mm. Dabei kommt je nach erforderlicher Stabilität und Tragfähigkeit des Fahrzeug-Bauteils 40 die untere Grenze der Dicke von 2 mm für schwächer belastete Abdeckungen in Betracht, während die obere Grenze für relativ dicke Bauteile, wie Holme oder Fahrzeugsäulen relevant ist. Die Gesamtdicke eines Dachmoduls 12 liegt im mittleren Bereich bei etwa 20 mm.

Auf der Innenseite des Fahrzeug-Dachmoduls 12 können beispielsweise in die erste tragende Schicht 24 Einleger 52 aus Metall eingebettet sein, die zur Befestigung benachbarter Bauteile, wie beispielsweise Sonnenblenden oder Handgriffe, dienen.

**Bezugszeichenliste**

| | | | |
|---|---|---|---|
| 10 | Fahrzeug | 34 | Entkopplungsschicht |
| 12 | Fahrzeug-Dachmodul | 40 | Fahrzeug-Bauteil |
| 14 | Frontscheibe | 50 | tragende Schicht (Randbereich) |
| 16 | Dachrahmen | | |
| 18 | Flansch | 52 | Einleger |
| 20 | Kleberaupe | 60 | Fahrzeugtür |
| 22 | Außenhaut | 70 | Dachholm |
| 24 | erste tragende Schicht | 80 | A-Säule |
| 26 | Splitterschutz-Gewebe | 82 | B-Säule |
| 28 | Kernschicht (Wabenstruktur) | 84 | C-Säule |
| 30 | zweite tragende Schicht | | |
| 32 | Splitterschutz-Gewebe | | |
| 322 | Längsfaden | | |
| 324 | Querfaden | | |
| 326 | Masche | | |

## Patentansprüche

1. Fahrzeug-Außenhautbauteil (12; 40) aus Kunststoff,
- wie Fahrzeug-Dachmodul (12), Fahrzeugtür (60), Dachholm (70), Fahrzeug-Säule (80, 82, 84) Kotflügel, Motorraumklappe, Kofferraumklappe, Heckmodul, Dachschalen von Cabriolet-Verdecken, Front- oder Heckspoiler,
- mit wenigstens einer tragenden Schicht (24, 30) und
- mit wenigstens einer Außenhaut (22),
**dadurch gekennzeichnet,**
- **dass** das Fahrzeug-Außenhautbauteil (12; 40) zwei Splitterschutzschichten aufweist, die jeweils als Splitterschutz-Gewebe (26, 32) aus elastischem Material ausgebildet sind und
- **dass** das eine Splitterschutz-Gewebe (32) zwischen zwei benachbarten tragenden Schichten (28, 30; 30, 34) oder in eine der tragenden Schichten (30, 34) möglichst weit außen im Fahrzeug-Außenhautbauteil (12; 40) eingebettet ist und
**dass** das andere Splitterschutz-Gewebe (26) zwischen zwei benachbarten tragenden Schichten (24, 28; 28, 30) oder in eine der tragenden Schichten (24, 30) möglichst weit innen im Fahrzeug-Außenhautbauteil (12; 40) eingebettet ist.

2. Fahrzeug-Außenhautbauteil nach Anspruch 1, **dadurch gekennzeichnet, dass** die wenigstens eine tragende Schicht (24, 30)
- aus Polyurethan (PU) oder einem anderen Duromer und/oder
- aus einer Wabenschicht (28) oder einer Schaumschicht aus Kunststoff oder Metall oder einer Schicht aus einem anderen Kernmaterial und/oder
- aus einer Glasfasermatte und/oder
- aus einer Entkopplungsschicht (34)
besteht.

3. Fahrzeug-Außenhautbauteil nach Anspruch 1 oder 2, **dadurch gekennzeichnet, dass** die wenigstens eine tragende Schicht oder wenigstens eine von mehreren tragenden Schichten (24, 30)
- im Composite Spray Moulding-Verfahren (CSM-Verfahren) und/oder
- im Long Fibre Injection-Verfahren (LFI-Verfahren) und/oder
- im Glasfaser-Matten-Polyurethan-Verfahren (GM-PU-Verfahren) und/oder
- im Resin Transfer Moulding-Verfahren (RTM-Verfahren) und/oder
- im Sheet Moulding Compound- Verfahren (SMC-Verfahren) und/oder
- im Reaction Injection Moulding-Verfahren (RIM-Verfahren) und/oder
- im Reinforced Reaction Injection Moulding-Verfahren (RRIM-Verfahren) und/oder
- im Spritzguss-Verfahren
hergestellt ist.

4. Fahrzeug-Außenhautbauteil nach wenigstens einem der vorhergehenden Ansprüche, **dadurch gekennzeichnet, dass** das wenigstens eine Splitterschutz-Gewebe (26, 32)
- aus Polyethylen (PE) und/oder
- aus Polyethylenterephthalat (PET) und/oder
- aus Polyamid (PA) und/oder
- aus Polypropylen (PP) und/oder
- aus Aramid und/oder
- aus elastischem Polyurethan (PU) und/oder
- aus natürlichem oder synthetischem Kautschuk und/oder
- aus einem Stahlgewebe
besteht.

5. Fahrzeug-Außenhautbauteil nach einem der Ansprüche 1 bis 4, **dadurch gekennzeichnet, dass** dessen tragende Schichten von innen nach außen
- aus einer ersten Schicht (24) aus Polyurethan (PU),
- aus einer Kernschicht (28) in Wabentechnologie,
- aus einer zweiten Schicht (30) aus Polyurethan (PU),
- aus einer Entkopplungsschicht (34) und
- aus einer Außenhaut (22)
bestehen, wobei
- wenigstens ein Splitterschutz-Gewebe (26, 32)
- zwischen der ersten Schicht (24) aus Polyurethan (PU) und der Kernschicht (28)
und/oder
- zwischen der zweiten Schicht (30) aus Polyurethan (PU) und der Kernschicht (28)
und/oder
- zwischen der zweiten Schicht (30) aus Polyurethan (PU) und der Entkopplungsschicht (34)
angeordnet ist.

6. Fahrzeug-Außenhautbauteil nach wenigstens einem der vorhergehenden Ansprüche, **dadurch gekennzeichnet, dass** in wenigstens eine der tragenden Schichten (24, 30) aus Polyurethan oder einem anderen Duromer eine Glasfasermatte als Armierung eingebettet ist.

7. Fahrzeug-Außenhautbauteil nach wenigstens einem der vorhergehenden Ansprüche, **dadurch gekennzeichnet, dass** die Außenhaut (22) in der gewünschten Fahrzeugfarbe eingefärbt ist.

8. Fahrzeug-Außenhautbauteil nach wenigstens einem der vorhergehenden Ansprüche, **dadurch gekennzeichnet, dass** das Fahrzeug-Außenhautbauteil (40) eine Gesamtdicke von 2 mm bis 60 mm aufweist.

## Claims

1. Vehicle body shell component (12; 40) made of plastic,
- such as a vehicle roof module (12), vehicle door (60), roof post (70), vehicle pillar (80, 82, 84), wing, engine compartment cover, luggage compartment cover, rear-end module, roof shells of cabriolet hoods, front or rear spoilers,
- with at least one supporting layer (24, 30) and
- with at least one outer skin (22),
**characterized**
- **in that** the vehicle body shell component (12; 40) has two splinter protection layers which are in each case formed as a splinter protection fabric (26, 32) of elastic material and
- **in that** the one splinter protection fabric (32) is embedded between two adjacent supporting layers (28, 30; 30, 34) or in one of the supporting layers (30, 34) as far to the outside as possible in the vehicle body shell component (12; 40) and
- **in that** the other splinter protection fabric (26) is embedded between two adjacent supporting layers (24, 28; 28, 30) or in one of the supporting layers (24, 30) as far to the inside as possible in the vehicle body shell component (12; 40).

2. Vehicle body shell component according to Claim 1, **characterized in that** the at least one supporting layer (24, 30) consists
- of polyurethane (PU) or some other thermoset and/or
- of a honeycomb layer (28) or a foam layer of plastic or metal or a layer of some other core material and/or
- of a glass fibre mat and/or
- of a decoupling layer (34).

3. Vehicle body shell component according to Claim 1 or 2, **characterized in that** the at least one supporting layer or at least one of a number of supporting layers (24, 30) is produced
- by the composite spray moulding process (CSM process) and/or
- by the long fibre injection process (LFI process) and/or
- by the glass fibre mat polyurethane process (GM-PU process) and/or
- by the resin transfer moulding process (RTM process) and/or
- by the sheet moulding compound process (SMC process) and/or
- by the reaction injection moulding process (RIM process) and/or
- by the reinforced reaction injection moulding process (RRIM process) and/or
- by the injection moulding process.

4. Vehicle body shell component according to at least one of the preceding claims, **characterized in that** the at least one splinter protection fabric (26, 32) consists
- of polyethylene (PE) and/or
- of polyethylene terephthalate (PET) and/or
- of polyamide (PA) and/or
- of polypropylene (PP) and/or
- of aramid and/or
- of elastic polyurethane (PU) and/or
- of natural or synthetic rubber and/or
- of a steel mesh.

5. Vehicle body shell component according to one of Claims 1 to 4, **characterized in that** the supporting layers thereof consist, from the inside outward,
- of a first layer (24) of polyurethane (PU),
- of a core layer (28) created by honeycomb technology,
- of a second layer (30) of polyurethane (PU),
- of a decoupling layer (34) and
- of an outer skin (22),
- at least one splinter protection fabric (26, 32) being arranged
- between the first layer (24) of polyurethane (PU) and the core layer (28)
and/or
- between the second layer (30) of polyurethane (PU) and the core layer (28)
and/or
- between the second layer (30) of polyurethane (PU) and the decoupling layer (34).

6. Vehicle body shell component according to at least one of the preceding claims, **characterized in that** a glass fibre mat is embedded as reinforcement in at least one of the supporting layers (24, 30) of polyurethane or some other thermoset.

7. Vehicle body shell component according to at least one of the preceding claims, **characterized in that** the outer skin (22) is coloured in the desired vehicle colour.

8. Vehicle body shell component according to at least one of the preceding claims, **characterized in that** the vehicle body shell component (40) has an overall thickness of 2 mm to 60 mm.

## Revendications

1. Composant de revêtement extérieur de véhicule (12 ; 40) en matière plastique,
- tel qu'un module de toit de véhicule (12), une porte de véhicule (60), un arceau de pavillon (70), une colonne de véhicule (80, 82, 84), une aile, un capot de moteur, un capot de coffre, un module arrière, une coque de capote de cabriolet, un spoiler avant ou arrière,
- comprenant au moins une couche porteuse (24, 30) et
- comprenant au moins un revêtement extérieur (22), **caractérisé en ce que**
- le composant de revêtement extérieur de véhicule (12 ; 40) comprend deux couches de protection contre les éclats, qui sont chacune configurées sous la forme d'un tissu de protection contre les éclats (26, 32) en un matériau élastique, et
- **en ce qu'**un tissu de protection contre les éclats (32) est incorporé entre deux couches porteuses voisines (28, 30 ; 30, 34) ou dans une des couches porteuses (30, 34) le plus à l'extérieur possible dans le composant de revêtement extérieur de véhicule (12 ; 40), et
**en ce que** l'autre tissu de protection contre les éclats (26) est incorporé entre deux couches porteuses voisines (24, 28 ; 28, 30) ou dans une des couches porteuses (24, 30) le plus à l'intérieur possible dans le composant de revêtement extérieur de véhicule (12 ; 40) .

2. Composant de revêtement extérieur de véhicule selon la revendication 1, **caractérisé en ce que** ladite au moins une couche porteuse (24, 30) est constituée
- de polyuréthane (PU) ou d'un autre duromère et/ou
- d'une couche en nid d'abeilles (28) ou d'une couche de mousse en matière plastique ou en métal ou d'une couche en un autre matériau de noyau et/ou
- d'un mat de fibres de verre et/ou
- d'une couche de découplage (34).

3. Composant de revêtement extérieur de véhicule selon la revendication 1 ou 2, **caractérisé en ce que** ladite au moins une couche porteuse ou au moins une parmi plusieurs couches porteuses (24, 30) est fabriquée
- par le procédé de moulage par pulvérisation composite (procédé CSM) et/ou
- par le procédé d'injection de fibres longues (procédé LFI) et/ou
- par le procédé à mats de fibres de verre-polyuréthane (procédé GM-PU) et/ou
- par le procédé de moulage par transfert de résine (procédé RTM) et/ou
- par le procédé de moulage en feuilles (procédé SMC) et/ou
- par le procédé de moulage par injection et réaction (procédé RIM) et/ou
- par le procédé de moulage par injection et réaction renforcé (RRIM) et/ou
- par le procédé de moulage par injection.

4. Composant de revêtement extérieur de véhicule selon au moins l'une quelconque des revendications précédentes, **caractérisé en ce que** ledit au moins un tissu de protection contre les éclats (26, 32) est constitué
- de polyéthylène (PE) et/ou
- de polyéthylène téréphtalate (PET) et/ou
- de polyamide (PA) et/ou
- de polypropylène (PP) et/ou
- d'aramide et/ou
- de polyuréthane élastique (PU) et/ou
- de caoutchouc naturel ou synthétique et/ou
- d'un tissu d'acier.

5. Composant de revêtement extérieur de véhicule selon l'une quelconque des revendications 1 à 4, **caractérisé en ce que** ses couches porteuses sont constituées de l'intérieur vers l'extérieur
- d'une première couche (24) en polyuréthane (PU),
- d'une couche de noyau (28) en une technologie de nid d'abeilles,
- d'une deuxième couche (30) en polyuréthane (PU),
- d'une couche de découplage (34) et
- d'un revêtement extérieur (22),
- au moins un tissu de protection contre les éclats (26, 32) étant agencé
- entre la première couche (24) de polyuréthane (PU) et la couche de noyau (28)
et/ou
- entre la deuxième couche (30) de polyuréthane (PU) et la couche de noyau (28)
et/ou
- entre la deuxième couche (30) de polyuréthane (PU) et la couche de découplage (34).

6. Composant de revêtement extérieur de véhicule selon au moins l'une quelconque des revendications précédentes, **caractérisé en ce qu'**un mat de fibres de verre est incorporé en tant qu'armature dans au moins une des couches porteuses (24, 30) en polyuréthane ou en un autre duromère.

7. Composant de revêtement extérieur de véhicule selon au moins l'une quelconque des revendications précédentes, **caractérisé en ce que** le revêtement extérieur (22) est coloré en la couleur de véhicule souhaitée.

8. Composant de revêtement extérieur de véhicule selon au moins l'une quelconque des revendications précédentes, **caractérisé en ce que** le composant de revêtement extérieur de véhicule (40) présente une épaisseur totale de 2 mm à 60 mm.
